# EUROPEAN PATENT SPECIFICATION

(11) **EP 4 175 837 B1**
(45) Date of publication and mention of the grant of the patent: **17.09.2025**
(21) Application number: 21739670.4
(22) Date of filing: 05.07.2021
(51) Int. Cl.: B60C 1/00, C08L 9/06, B60C 11/00

(54) **TREAD WITH HIGH DRAINAGE**
LAUFFLÄCHE MIT HOHER ENTWÄSSERUNG
BANDE DE ROULEMENT À DRAINAGE ÉLEVÉ

(30) Priority: 06.07.2020 IT 202000016276
(43) Date of publication of application: 10.05.2023
(73) Proprietor: Bridgestone Europe NV/SA, 1930 Zaventem (BE)
(72) Inventor: AGORETTI, Pasquale, 00128 Roma (IT); FIORENZA, Paolo, 00128 Rome (IT); AURISICCHIO, Claudia, 00128 Roma (IT); BERNAL ORTEGA, Maria del Mar, 00128 Roma (IT)
(74) Representative: Marchetti, Alessio
(86) International application number: PCT/EP2021/068514
(87) International publication number: WO 2022/008443

(56) References cited:
- EP-A1- 1 171 529
- EP-A1- 2 042 346
- EP-A1- 3 619 263

## Description

The present invention relates to a tread having a high drainage capacity.

Part of the research in the field of pneumatic tyres is concentrated on obtaining treads that have improved performance in terms of wet grip and, in particular, in terms of wet braking.

As is known to a person skilled in the art, the grip of a tread on a road surface, under wet conditions, is a function of the capability to remove the water layer that is formed between the surface and the tread itself. The presence of this layer of water necessarily compromises the effective grip of the tread on the surface.

In order to facilitate the removal of the layer of water, the treads are provided with grooves by means of which a drainage step ensues.

In this regard, it is important to explain how the braking action, under wet conditions, of a pneumatic tyre provides for a first drainage step, wherein the layer of water located between the tread and the surface is removed from the tread, and a friction step, wherein the blocks of the tread adhere to the surface. The shorter the drainage step, the more efficient the braking action.

As is known, a solution for rendering the drainage step shorter is that of increasing the volume of the grooves in the tread. This solution, although it succeeds in rendering the drainage step shorter and more effective, nevertheless causes the area of contact between the tread and the surface to be reduced to the detriment of the friction step and, therefore, of the braking action. Furthermore, it is known that an increase in the volume of the grooves can negatively influence the wear resistance of the tread.

The Applicant, in patent application No. EP3619263, described and claimed the use, within the rubber compound of the tread, of a particular wax composed of at least 50 wt.% of nonacosanediols, that is capable of conferring to the tread surface itself improved hydrophobic properties and, therefore, drainage. EP2042346 relates to a tread configured with lugs and grooves comprising groove walls wherein at least a portion of the groove walls comprises a repellent layer which comprises at least an elastomer and a hydrophobic material.

Furthermore, for some time in the pneumatic tyre industry, it has been known that producing a hydrophobic surface within the grooves of a tread favors a more rapid evacuation of water. The term hydrophobic surface structure refers to a surface wherein appropriate protruding elements are present. As is known, the presence of such protruding elements involves an increase in the contact angle between the water droplet and the surface. The greater the contact angle between the drop of water and the surface of the grooves, the greater will be the tendency of the water to evacuate the surface and, therefore, the shorter the drainage step will be. Such a solution has the great advantage of intervening only upon the surface of the grooves and not upon the number and/or the dimensions thereof, without, therefore, reducing the area of contact between the tread itself and the surface.

The inventors of the present invention have found a surprising synergistic effect between the use within the compound of the particular wax and the presence in the grooves of the hydrophobic surface structure. Such a synergistic effect ensures high levels of hydrophobicity for the tread grooves. In particular, as will be described below, it was verified that in the presence of the hydrophobic surface structure, an increase within the compound of the quantity of the particular wax ensures an increase in hydrophobicity that is far higher than that which would instead be obtained in the absence of a hydrophobic surface structure.

The object of the present invention is a tread comprising a plurality of grooves and manufactured using a rubber compound comprising at least one cross linkable unsaturated-chain polymeric base, a filler, a vulcanization system and a wax composed of at least 50% by weight of nonacosandiols; said tread being characterized in that at least part of said grooves has a hydrophobic surface structure composed of a plurality of protruding elements.

Here and hereinafter the term wax refers to a substance that is malleable at ambient temperature, with a viscosity that is relatively low when melted, insoluble in water and hydrophobic.

Here and hereinafter, the term "cross-linkable unsaturated-chain polymeric base" refers to any natural or synthetic non-cross-linked polymer capable of assuming all of the chemical-physical and mechanical characteristics typically assumed by elastomers after cross-linking (curing) with sulfur or peroxide systems.

Here and hereinafter, the term vulcanization system refers to a combination of vulcanizing agents, for example sulfur, and comprises accelerating compounds that in the preparation of the compound are added during a final blending step and that have the purpose of promoting the vulcanization of the polymeric base once the compound is subjected to a vulcanization temperature.

Preferably, the protruding elements are cylinders or prisms with a square or triangular base or other regular or non-regular plane geometrical figures and all of the combinations thereof obtained by means of various techniques (molding, deposition, etching, etc.).

Preferably, the hydrophobic surface structure consists of square-based prisms produced, under particular operating conditions, using a laser.

Such a surface structure, being formed within the tread grooves, will last over time, even as the tread wears down.

In particular, a laser beam was applied directly to a surface of the grooves of a vulcanized tread. The laser beam used is characterized by a power ranging between 10 and 50 W, a frequency ranging between 1 and 10 kHz, a resolution ranging between 0.01 and 1 mm, and a scanning velocity of between 1 and 1000 mm/s.

Preferably, the power ranges between 20 and 40 W, the frequency ranges between 3 and 7 kHz, the resolution ranges between 0.05 and 0.5 mm, and the scanning velocity ranges between 300 and 700 mm/s.

The inventors of the present invention have confirmed that, if the operating conditions indicated above are observed, it is possible to create a surface texture of the grooves that has the intended characteristics of hydrophobicity in terms of contact angle.

Preferably, said protruding elements each have a height ranging between 0.01 and 2 mm and an axis of extension that forms an angle with the surface of the groove ranging between 60° and 120°. The protruding elements are spaced therebetween by a distance ranging between 0.01 and 5 mm; more preferably at a distance ranging between 0.05 and 1 mm. Most preferably, the protruding elements each have a height ranging between 0.05 and 0.5 mm and an axis of extension that forms an angle with the surface of the groove ranging between 80° and 100°.

Preferably, said nonacosandiols comprise a C2-C6 chain arranged between the two hydroxyl groups.

Preferably, said nonacosandiols are included in the group comprising nonacosane-4,10-diol, nonacosane-5,10-diol and nonacosane-10,13-diol.

Preferably, said wax is derived from lotus leaves.

Preferably, said wax is present within the compound in a quantity ranging between 0.5 and 10 phr, more preferably between 1 and 5 phr.

A further object of the present invention is a pneumatic tyre comprising a tread according to the present invention.

The following are exemplary non-limiting embodiments given purely by way of illustration.

Three rubber tread compounds were produced (A - C), the first of which (A) does not comprise the wax with nonacosandiols, while the other two (B and C) comprise the wax with nonacosandiols with differing quantities.

The example compounds were prepared according to the procedure below.

### (first productive blending step - MASTERBATCH)

Before the start of the blending, a mixer with tangential rotors and an internal volume of between 230 and 270 liters was loaded with the cross-linkable unsaturated chain polymeric base, the silica, the silane bonding agent and the carbon black reaching a fill factor of 66-72%.

The mixer was operated at a speed of between 40-60 revolutions/minute, and the mixture thus formed was discharged once a temperature of between 145-165°C had been reached.

### (second non-productive blending step)

The mixture from the previous step was reworked in the mixer operating at a speed of 40-60 rpm and subsequently removed once a temperature of 130-150°C had been reached.

### (productive blending step)

The vulcanization system, zinc oxide, stearic acid and, when required, the wax was added to the mixture obtained from the previous step, reaching a fill factor of 63-67%.

The mixer was operated at a speed of between 20-40 revolutions/minute, and the mixture thus formed was discharged once a temperature of between 100-110°C had been reached.

Here and hereinafter the term "non-productive blending step" refers to a blending step wherein, to the cross-linkable unsaturated chain polymeric base are added and mixed the ingredients of the compound with the exception of the vulcanization system; while the term "productive blending step" refers to a blending step wherein to the compound under preparation the vulcanization system is added and blended.

Table I shows the compositions in phr of the three compounds.

**TABLE I**

| | A | B | C |
|---|---|---|---|
| First non-productive blending step | | | |
| S-SBR | 80.0 | | |
| BR | 20.0 | | |
| Silica | 80.0 | | |
| Carbon black | 8.0 | | |
| Silane bonding agent | 8.0 | | |

| Productive blending step | | | |
|---|---|---|---|
| Sulfur | 1.5 | | |
| ZnO | 1.5 | | |
| Stearic acid | 1.5 | | |
| TBBS | 1.5 | | |
| DPG | 1.0 | | |
| Wax | -- | 2.0 | 4.0 |

S-SBR is a polymer base obtained by means of a polymerization process in a solution with an average molecular weight, respectively, ranging between 800-1500x10³ and between 500-900x10³, with a styrene content ranging between 10 and 45% and a vinyl content ranging between 20 and 70%.

BR is a polymeric base constituted from polybutadiene
The silica is a silica with a surface area of about 170 m²/g and marketed under the name Ultrasil VN3 by the EVONIK company.

The carbon black is N134
The silane bonding agent is marketed under the name SI75 by the EVONIK company
TBBS is the acronym for the compound N-tert-butyl-2-benzothiazole sulfenamide, which is used as a vulcanization accelerant.

DPG is the acronym for the compound Diphenyl-guanidine used as a vulcanization accelerant.

In particular, the wax is derived from Lotus leaves and is marketed under the name Lotus Floral Wax (INCI: Nelumbo Nucifera Floral Wax) by the company Natural Sourcing, LLC. From a chemical analysis of the wax used, the presence was detected of 51.4% by weight of nonacosandiols included in the group comprising nonacosane-4,10-diol, nonacosane-5,10-diol and nonacosane-10,13-diol.

With each of the three compounds of Table I, two respective rubber tread samples were produced.

On one of the two samples, in relation to each compound of Table I, the same hydrophobic surface structure was produced.

The hydrophobic surface structure was produced using a CO₂ laser wherein the operating conditions thereof are reported in Table II.

**TABLE II**

| | G |
|---|---|
| Power (W) | 30 |
| Frequency (kHz) | 5 |
| Scanning speed (mm/s) | 1000 |
| Resolution (mm) | 0.1 |

In this way, a hydrophobic surface structure was obtained on three of the six samples, comprising a plurality of protruding elements in the shape of a square-based prism, wherein each thereof has a height equal to 0.5 mm and an axis of extension that forms a 90° angle with the surface of the groove. Furthermore, the protruding elements are spaced apart therebetween by a distance of 0.5 mm.

To recap, six tread rubber samples were produced: A' made using compound A and devoid of the hydrophobic surface structure; A" made using compound A and whereupon the hydrophobic surface structure was implemented; B' made using compound B and devoid of the hydrophobic surface structure; B" made using compound B, and whereupon the hydrophobic surface structure was implemented; C' made using compound C and devoid of the hydrophobic surface structure; C" made using compound C and whereupon the hydrophobic surface structure was implemented.

The contact angle between a drop of water and the surface was measured on each of the six samples.

The contact angles were measured using a tensiometer according to the method described in ASTM D7334.

Indicated in Table II are the contact angles measured.

**TABLE III**

| Without the hydrophobic surface structure | | | With the hydrophobic surface structure | | |
|---|---|---|---|---|---|
| A' | B' | C' | A" | B" | C" |
| 100° | 102° | 105° | 132° | 138° | 144° |

As can be verified from the above data in Table III, the presence, in the sample, of the hydrophobic surface structure induces an increase in contact angle that is significantly greater than that, with the same adding of wax to the compound, which would be obtained in the absence of the hydrophobic surface structure. Such an effect is evident from the comparison of the increase in the contact angle that is obtained from the transition from A" to B" in relation to the increase that is achieved from the transition from A' to B', as well as from the comparison of the increase in contact angle that is obtained from the transition from B" to C" in relation to the increase that is obtained from the transition from **B' to** C'.

**In** this way the implementation is obtained of surface structures that are able to ensure a drainage step that is even shorter than that which can be obtained with the presence of wax only.

**It** is important to underline how the implementation of the hydrophobic surface structure using the laser technique, insofar as it does not require any modification to the volume of the grooves, does not lead to a decrease in the area of contact between the tread and the surface, and makes it possible to change the type of hydrophobic surface structure as a function of the composition of the tread without this entailing any kind of disadvantage in terms of production.

Furthermore, as previously mentioned, insofar as this type of treatment is only applied within the grooves (therefore within the existing voids), the resulting advantages will endure over time, even as the tread wears down.

## Claims

1. Tread comprising a plurality of grooves and manufactured using a rubber compound comprising at least one cross linkable unsaturated chain polymeric base, a filler, a vulcanization system and a wax composed of at least 50% by weight of nonacosandiols; said tread being **characterized in that** at least part of said grooves has a hydrophobic surface structure composed of a plurality of protruding elements.

2. Tread according to claim 1, **characterized in that** the projecting elements are cylinders or square-based prisms or triangular.

3. Tread according to claim 1 or 2, **characterized in that** the hydrophobic surface structure is produced by means of the action of a laser beam **characterized by** a power ranging between 10 and 50 W, a frequency ranging between 1 and 10 kHz, a resolution ranging between 0.01 and 1 mm, and a scanning velocity of between 1 and 1000 mm/s.

4. Tread according to claim 3, **characterized in that** the laser beam has a power ranging between 20 and 40 W, a frequency ranging between 3 and 7 kHz, a resolution ranging between 0.05 and 0.15 mm, and a scanning velocity ranging between 300 and 700 mm/s.

5. Tread according to one of the preceding claims, **characterized in that** said protruding elements each have a height ranging between 0.01 and 2 mm and an axis of extension that forms an angle with the surface of the groove ranging between 60 and 120°; said protruding elements being spaced apart therebetween by a distance ranging between 0.01 and 5 mm.

6. Tread according to one of the preceding claims, **characterized in that** said nonacosandiols comprise a C2-C6 chain arranged between the two hydroxyl groups.

7. Tread according to one of the preceding claims, **characterized in that** said nonacosandiols are included in the group comprising nonacosane-4,10-diol, nonacosane-5,10-diol, nonacosane-10,13-diol.

8. Tread according to one of the preceding claims, **characterized in that** said wax is derived from lotus leaves.

9. Tread according to one of the preceding claims, **characterized in that** said wax is present within the compound in a quantity ranging between 0.5 and 10 phr.

10. Pneumatic tyre comprising a tread according to one of the preceding claims.

## Patentansprüche

1. Lauffläche, umfassend eine Vielzahl von Rillen, und hergestellt unter Verwendung einer Gummimischung, umfassend mindestens eine vernetzbare ungesättigte Polymerkettenbasis, einen Füllstoff, ein Vulkanisationssystem und ein Wachs, das zu mindestens 50 Gew.-% aus Nonacosandiolen besteht; wobei die Lauffläche **dadurch gekennzeichnet ist, dass** mindestens ein Teil der Rillen eine hydrophobe Oberflächenstruktur aufweist, die aus einer Vielzahl von hervorstehenden Elemente besteht.

2. Lauffläche nach Anspruch 1, **dadurch gekennzeichnet, dass** die hervorstehenden Elemente Zylinder oder Prismen mit quadratischer oder dreieckiger Grundfläche sind.

3. Lauffläche nach Anspruch 1 oder 2, **dadurch gekennzeichnet, dass** die hydrophobe Oberflächenstruktur mittels Einwirkung eines Laserstrahls erzeugt wird, **gekennzeichnet durch** eine Leistung, die in einem Bereich zwischen 10 und 50 W liegt, eine Frequenz, die in einem Bereich zwischen 1 und 10 kHz liegt, eine Auflösung, die in einem Bereich zwischen 0,01 und 1 mm liegt und eine Abtastgeschwindigkeit, die zwischen 1 und 1000 mm/s liegt.

4. Lauffläche nach Anspruch 3, **dadurch gekennzeichnet, dass** der Laserstrahl eine Leistung in einem Bereich zwischen 20 und 40 W, eine Frequenz in einem Bereich zwischen 3 und 7 kHz, eine Auflösung in einem Bereich zwischen 0,05 und 0,15 mm und eine Abtastgeschwindigkeit in einem Bereich zwischen 300 und 700 mm/s aufweist.

5. Lauffläche nach einem der vorstehenden Ansprüche,
**dadurch gekennzeichnet, dass** die hervorstehenden Elemente jeweils eine Höhe in einem Bereich zwischen 0,01 und 2 mm und eine Erstreckungsachse aufweisen, die mit der Oberfläche der Rille einen Winkel in einem Bereich zwischen 60 und 120° ausbildet; wobei die hervorstehenden Elemente durch einen Abstand in einem Bereich zwischen 0,01 und 5 mm voneinander beabstandet sind.

6. Lauffläche nach einem der vorstehenden Ansprüche,
**dadurch gekennzeichnet, dass** die Nonacosandiole eine zwischen den zwei Hydroxylgruppen angeordnete C2-C6-Kette umfassen.

7. Lauffläche nach einem der vorstehenden Ansprüche,
**dadurch gekennzeichnet, dass** die Nonacosandiole in der Gruppe, umfassend Nonacosan-4,10-diol, Nonacosan-5,10-diol und Nonacosan-10,13-diol, eingeschlossen sind.

8. Lauffläche nach einem der vorstehenden Ansprüche,
**dadurch gekennzeichnet, dass** das Wachs aus Lotusblättern gewonnen wird.

9. Lauffläche nach einem der vorstehenden Ansprüche,
**dadurch gekennzeichnet, dass** das das Wachs in der Verbindung in einer Menge in einem Bereich zwischen 0,5 und 10 phr vorhanden ist.

10. Luftreifen, umfassend eine Lauffläche nach einem der vorstehenden Ansprüche.

## Revendications

1. Bande de roulement comprenant une pluratiés de rainures et fabriquée à l'aide d'un composé de caoutchouc comprenant au moins une base polymère à chaîne insaturée réticulable, une charge, un système de vulcanisation et une cire composée d'au moins 50 % en poids de nonacosandiols ; ladite bande de roulement est **caractérisée en ce qu'**au moins une partie desdites rainures présente une structure de surface hydrophobe composée d'une pluralité d'éléments faisant saillie.

2. Bande de roulement selon la revendication 1, **caractérisée en ce que** les éléments faisant saillie sont des cylindres ou des prismes à base carrée ou triangulaire.

3. Bande de roulement selon la revendication 1 ou 2, **caractérisée en ce que** la structure de surface hydrophobe est produite au moyen de l'action d'un faisceau laser **caractérisé par** une puissance comprise entre 10 et 50 W, une fréquence comprise entre 1 et 10 kHz, une résolution comprise entre 0,01 et 1 mm, et une vitesse de balayage comprise entre 1 et 1000 mm/s.

4. Bande de roulement selon la revendication 3, **caractérisée en ce que** ledit faisceau laser présente une puissance allant de 20 à 40 W, une fréquence allant de 3 à 7 kHz, une résolution allant de 0,05 à 0,15 mm, et une vitesse de balayage allant de 300 à 700 mm/s.

5. Bande de roulement selon l'une des revendications précédentes, **caractérisée en ce que** lesdits éléments faisant saillie présentent chacun une hauteur allant de 0,01 et 2 mm et un axe d'extension qui forme un angle avec la surface de la rainure allant de 60 à 120° ; lesdits éléments faisant saillie étant espacés entre eux d'une distance allant de 0,01 à 5 mm.

6. Bande de roulement selon l'une des revendications précédentes, **caractérisée en ce que** lesdits nonacosandiols comprennent une chaîne en C2 à C6 agencée entre les deux groupes hydroxyle.

7. Bande de roulement selon l'une des revendications précédentes, **caractérisée en ce que** lesdits nonacosandiols sont inclus dans le groupe comprenant nonacosane-4,10-diol, nonacosane-5,10-diol, nonacosane-10,13-diol.

8. Bande de roulement selon l'une des revendications précédentes, **caractérisée en ce que** ladite cire est dérivée de feuilles de lotus.

9. Bande de roulement selon l'une des revendications précédentes, **caractérisée en ce que** ladite cire est présente dans le composé en une quantité allant de 0,5 à 10 pcc.

10. Pneumatique comprenant une bande de roulement selon l'une des revendications précédentes.
